# FASCICULE DE BREVET EUROPEEN

(11) **EP 2 225 314 B1**
(45) Date de publication et mention de la délivrance du brevet: **15.08.2018**
(21) Numéro de dépôt: 08867106.0
(22) Date de dépôt: 23.12.2008
(51) Int. Cl.: C08J 7/18

(54) **SILICONES-AUTOADHESIFS, PROCEDE DE FABRICATION, COMPLEXES LES UTILISANT ET APPLICATIONS**
SILIKON-SELBSTHAFTMITTEL, VERFAHREN ZU IHRER HERSTELLUNG, KOMPLEXE DAMIT UND VERWENDUNGEN DAVON
SILICONE-SELF-ADHESIVES, METHOD FOR THE PRODUCTION THEREOF, COMPLEXES USING SAME AND USES

(30) Priorité: 27.12.2007 FR 0760382
(43) Date de publication de la demande: 08.09.2010
(73) Titulaire: ELKEM SILICONES France SAS, 69003 Lyon (FR)
(72) Inventeur: FRANCES, Jean-Marc, F-69330 Meyzieu (FR); DUFFY, Sean, F-69008 Lyon (FR)
(74) Mandataire: Cabinet Plasseraud
(86) Numéro de dépôt international: PCT/EP2008/068261
(87) Numéro de publication internationale: WO 2009/083563

(56) Documents cités:
- WO-A-01/58992
- WO-A-96/34926
- WO-A2-03/041130

## Description

La présente invention concerne des silicones-autoadhésifs, leur procédé de fabrication, des complexes les utilisant et leurs applications.

Dans divers domaines, on applique un revêtement silicone anti-adhérent sur un substrat, et un revêtement adhésif sur un autre substrat, puis on met face à face les surfaces ainsi revêtues et enfin on les presse l'une contre l'autre pour faire adhérer réversiblement les substrats. Les systèmes concernés sont par exemple ceux des étiquettes autocollantes ou des rubans adhésifs. Selon l'application ou le positionnement marketing du produit, on peut souhaiter une force de décollement plus ou moins élevée pour rendre l'ouverture difficile ou au contraire plus facile.

Pour moduler cette force de décollement, il a déjà été proposé d'utiliser le traitement Corona. Mais l'effet obtenu n'est pas homogène et n'est que temporaire.

On a aussi modulé la force de décollement par traitement aux rayonnements UV ou faisceau d'électrons (EP-A-1 278 809). Mais un tel traitement n'est applicable qu'à des substrats transparents aux rayonnements UV. En outre, l'énergie transmise n'est pas facile à maitriser.

L'incorporation dans la composition du revêtement silicone de résines silicone MQ ou MM^{Vi}Q ou MD^{Vi}Q ou MM'Q ou MD'Q, est un autre moyen connu de modulation de cette force de décollement dans les systèmes sus-évoqués. Mais les résines de ces types sont difficiles à fabriquer. Conventionnellement, M signifie « unité siloxy monosubstituée par un atome d'oxygène R₃SiO_{1/2} », D signifie « unité siloxy di-substituée par un atome d'oxygène R₂SiO_{2/2}», Q signifie « unité siloxy tétra-substituée par un atome d'oxygène SiO_{4/2} », M' signifie « unité siloxy monosubstituée par un atome d'oxygène et comportant un groupement H lié à l'atome de silicium HR₂SiO_{½}», D' signifie « unité siloxy di-substituée par un atome d'oxygène et comportant un groupement H lié à l'atome de silicium HRSiO_{2/2}», M^{Vi} signifie « unité siloxy monosubstituée par un atome d'oxygène et comportant un groupement Vinyle H₂C=CH- lié à l'atome de silicium ViR₂SiO_{½} », D^{Vi} signifie « unité siloxy di-substituée par un atome d'oxygène et comportant un groupement Vinyle lié à l'atome de silicium ViRSiO_{2/2}».

Il a été également proposé d'obtenir des revêtements silicones à partir de plasma sous vide tel que décrit dans la demande PCT WO02/28548, mais ce procédé est difficilement applicable pour obtenir directement des revêtements anti-adhérents de grande surface à haute vitesse.

On connaît par ailleurs, au travers de la demande de brevet FR-A-2 873 705, un procédé de traitement par plasma froid, sous pression atmosphérique, pour traiter une surface de polyester ou de polyamide (PA) en vue de favoriser son assemblage ultérieur avec des polyoléfines. Dans ce procédé, la surface du substrat à traiter est soumise à un plasma froid créé par action d'une décharge électrique sur un gaz plasmagène à base d'azote, présentant une teneur en oxygène inférieure à 50 ppm, à une pression de l'ordre de la pression atmosphérique, de façon à greffer en surface du substrat des fonctions azotées de type amines notamment, les atomes d'azote greffés en surface du substrat représentant de 0,5 à 10 %, de préférence de 1,5 à 4 %, des compositions atomiques de surface en carbone, oxygène et azote obtenues par mesure ESCA à un angle de 75.

La demande de brevet WO-A-01/58992 vise un procédé de traitement plasma de surface de substrats polymères (polyoléfine, polymère vinylique, polystyrène, polyester, polyamide, polyacrylonitrile ou polycarbonate) au cours duquel le substrat est soumis à une décharge électrique à barrière diélectrique, dans un mélange gazeux comportant un gaz porteur (N₂), ainsi qu'un gaz réducteur (H₂ à 50-30 000 ppm vol) et/ou un gaz oxydant (CO₂ à 50-2 000 ppm vol), à la pression atmosphérique. Ce traitement augmente l'énergie de surface et l'adhésion.

Tout cet art antérieur n'offre pas de solution satisfaisante au problème de la modulation de l'adhérence des revêtements silicone anti-adhérents.

Compte-tenu de leur prix élevé, il serait souhaitable de ne pas utiliser des résines silicone MQ, ou MM^{Vi}Q, ou MD^{Vi}Q, ou MM'Q, ou MD'Q, pour moduler la force de décollement dans une composition silicone anti-adhérente.

Il serait aussi souhaitable de pouvoir moduler linéairement la force de décollement entre 10 cN/cm et 300 cN/cm.

Il serait également souhaitable de disposer d'un procédé simple à mettre en oeuvre par rapport aux traitements plasma sous vide, et que l'on puisse utiliser en mode dynamique, c'est-à-dire que l'on puisse traiter un substrat en déplacement, même à grande vitesse.

Dans l'idéal, un tel traitement devrait avoir des effets quasi permanents et doué d'une bonne homogénéité.

Or, après de longues recherches la demanderesse a mis au point un procédé conduisant à de nouvelles compositions silicones à base d'huiles silicones donnant satisfaction.

C'est pourquoi la présente invention a pour objet un procédé de préparation d'un substrat comprenant un revêtement anti-adhérent obtenu à partir d'une composition silicone "anti-adhérente" à base d'huile(s) silicone(s) au moins en partie réticulée(s), ce revêtement ayant des propriétés d'adhésion modifiées par rapport à ses propriétés d'origine. Selon ce procédé,
on prévoit un substrat au moins partiellement revêtu du susdit revêtement,
et on traite le revêtement silicone anti-adhérent par plasma froid,
environ à la pression atmosphérique,
dans une atmosphère d'azote éventuellement dopé par moins de 1 % en poids d'un ou plusieurs des éléments dans le groupe constitué par H₂ ; N₂O ; Acétylène ; SiH₄ ; CF₄, CO₂, O₂, H₂O,
ou dans une atmosphère de dioxyde de carbone, éventuellement dopé par moins de 1 % en poids d'un ou plusieurs des éléments choisis dans le groupe constitué par H₂ ; N₂O ; Acétylène ; SiH₄ ; CF₄, N₂, O₂, H₂O.

Dans la présente demande et dans ce qui suit, l'expression «composition silicone "anti-adhérente"» désigne une composition à base d'une ou plusieurs huiles polyorganosiloxane comprenant des motifs siloxy M et D et réticulable par polyaddition et/ou par voie cationique et/ou radicalaire, de préférence sous activation actinique (e.g. UV) et/ou thermique et/ou sous faisceau. Selon le cas, un catalyseur à base de platine, un photoamorceur ou un initiateur est utilisé pour cette réticulation.

M représente R₃SiO_{1/2}- et D représente R₂SiO-. Les radicaux R-représentent indépendamment les uns des autres -H, -OH ou un radical organique choisi parmi des radicaux hydrocarbures linéaires ou ramifiés contenant 0 ou 1 degré d'insaturation, substitués ou non, ledit radical organique étant de préférence :
- un groupe alkyle (ayant de 1 à 8 atomes de carbone) comme un groupe méthyle, éthyle, propyle, butyle, pentyle, hexyle, heptyle, octyle et leurs isomères,
- un groupe alkényle (ayant de 1 à 8 atomes de carbone) comme un groupe vinyle, allyle et hexényle,
- un groupe aryle comme phényle,
- un groupe fonctionnel comme un groupe aminoalkyle, époxyalkyle, (meth)acryloxyalkyle, isocyanoalkyle, trifluoroalkyle (notamment trifluoropropyle), ou perfluoroalkyle (notamment perfluorobutyléthyle).

Parmi ces produits, on préfère ceux où R désigne un radical alkyle inférieur en C₁-C₄, plus particulièrement méthyle ou un radical phényle ou trifluoropropyle.

Les motifs M sont, par exemple, des motifs Me₃SiO_{1/2}, Me₂ViSiO_{1/2}, Me₂EpoxySiO_{1/2}, Me₂AcrylateSiO_{1/2}, ViMe₂SiO ou Me₂HSiO_{1/2} ; Me désignant Méthyle dans toutes les formules de la présente invention.

Les motifs D sont par exemple des motifs Me₂SiO_{2/2}, MeViSiO_{2/2}, MeHSiO_{2/2}, MeEpoxySiO_{2/2} ou MeAcrylateSiO_{2/2}.

Il s'agit par exemple d'une composition à base de Me₂SiO_{2/2}, MeViSiO_{2/2}, Me₃SiO_{1/2}, Me₂ViSiO_{1/2}, Me₂HSiO_{1/2}, MeHSiO_{2/2} et SiO_{4/2},
de préférence à base de Me₂SiO_{2/2}, MeViSiO_{2/2}, Me₃SiO_{1/2}, Me₂ViSiO_{1/2}, Me₂HSiO_{1/2}, MeHSiO_{2/2} , et SiO_{4/2} < 10 % molaire Si,
notamment à base de Me₂SiO_{2/2}, Me₂ViSiO_{1/2}, MeViSiO_{2/2}, MeHSiO_{2/2}, Me₂HSiO_{1/2}, Me₃SiO_{1/2}, et SiO_{4/2} < 5 % molaire Si,
et particulièrement à base de Me₂SiO_{2/2}, Me₂ViSiO_{1/2}, MeHSiO_{2/2}, Me₂HSiO_{1/2}, Me₃SiO_{1/2} et SiO_{4/2} = 0 % molaire Si.

Il s'agit par exemple aussi d'une composition à base de Me₂SiO_{2/2}, Me₃SiO_{1/2}, Me₂EpoxySiO_{1/2}, MeEpoxySiO_{2/2} et SiO_{4/2},
de préférence à base de Me₂SiO_{2/2}, Me₃SiO_{1/2}, Me₂EpoxySiO_{1/2}, MeEpoxySiO_{2/2} et SiO_{4/2} < 10 % molaire Si,
notamment à base de Me₂SiO_{2/2}, Me₃SiO_{1/2}, Me₂EpoxySiO_{1/2}, MeEpoxySiO_{2/2} et SiO_{4/2} < 5% molaire,
et particulièrement à base de Me₂SiO_{2/2}, Me₃SiO_{1/2}, Me₂EpoxySiO_{1/2}, MeEpoxySiO_{2/2} et SiO_{4/2} = 0 % molaire Si.

Il s'agit par exemple aussi d'une composition à base de Me₃SiO_{1/2}, Me₂AcrylateSiO_{1/2}, à base de Me₂SiO_{2/2}, MeAcrylateSiO_{2/2} et SiO_{4/2},
de préférence à base de Me₃SiO_{1/2}, Me₂AcrylateSiO_{1/2}, de Me₂SiO_{2/2}, MeAcrylateSiO_{2/2} et SiO_{4/2} < 10 % molaire Si,
notamment à base de Me₃SiO_{1/2}, Me₂AcrylateSiO_{1/2}, de Me₂SiO_{2/2}, MeAcrylateSiO_{2/2} et SiO_{4/2} < 5 % molaire Si et particulièrement à base de Me₃SiO_{1/2}, Me₂AcrylateSiO_{1/2}, de Me₂SiO_{2/2}, MeAcrylateSiO_{2/2} et SiO_{4/2} = 0 % molaire Si.

Le substrat revêtu peut être de diverses natures comme du papier ou analogues et/ou des matières plastiques.

Quand le substrat est en papier ou analogue, il peut s'agir, par exemple, d'une glassine, ou d'un papier couché ou encore du papier kraft.

Quand le substrat est constitué par une ou plusieurs matières plastiques, ce sont, par exemple, des thermoplastiques comme des polyoléfines telles que le polyéthylène et le polypropylène, les polycarbonates, les polyuréthanes, les chlorures de polyvinyle, les polyesters (par exemple, les téréphtalates de polyéthylène), les polyméthacrylates, les polyépoxides, les polysulfones, les polyamides, les polyimides, les polystyrènes, les résines phénoliques, les résines époxy ou mélamine-formaldéhyde.

Il peut être aussi formé de films métalliques, par exemple d'acier inox ou non, d'aluminium ou de cuivre de préférence de films métalliques minces.

L'épaisseur du substrat à revêtir peut aller par exemple, selon l'application de 0,001 à 10 mm, de préférence de 0,01 à 1 mm, notamment de 0,05 à 0,5 mm, tout particulièrement de 0,02 à 0,2 mm.

Le substrat peut se présenter sous forme aplatie comme une feuille métallique, un tissu ou un non tissé, un film, un papier, un carton, un ruban, mais également sous une forme non aplatie comme tubulaire.

Le substrat peut par ailleurs se présenter sous forme de fibres naturelles ou synthétiques (tissées ou non tissées).

Il peut notamment être composite. Il peut être essentiellement ou totalement constitué de tels composés.

Par « revêtu », on entend que tout ou partie de la surface du substrat peut être revêtu par la composition silicone anti-adhérente, selon l'application envisagée. Par exemple si le substrat est une feuille, l'une des faces peut être revêtue, ou les deux faces, et ceci sur une petite, moyenne ou grande surface.

Rappelons qu'un plasma froid encore appelé plasma non thermique, est un plasma apparaissant sous des pressions qui ne sont pas des hautes pressions. Sous ces conditions, les seules transmissions d'énergie importantes entre particules se font par collision d'électrons. Ainsi aucun équilibre thermique ne peut se produire. Le système est à température ambiante au niveau macroscopique, d'où le nom de plasma froid. Cependant au niveau microscopique les électrons émis par l'électrode entrent en collision avec les molécules de gaz et les activent. Il se produit une ionisation ou une dissociation produisant des radicaux. Ces espèces excitées diffusent dans l'enceinte du réacteur et atteignent la surface du substrat. Plusieurs types de réactions de surface peuvent alors intervenir: implantation, transfert d'énergie, création de liaisons ou destruction de liaisons. Le milieu plasma, par la présence de radicaux libres et d'espèces ionisées, permet en particulier une modification en surface du substrat traité dans des conditions douces.

Le terme «environ à la pression atmosphérique» désigne par exemple une pression de 0,5 à 2 bars, de préférence de 0,75 à 1,5 bar, notamment de 0,75 à 1,25 bar, tout particulièrement de 0,9 à 1,1 bar.

On retient plus particulièrement le procédé ALDYNE® consistant à utiliser des décharges électriques filamentaires, uniformément distribuées à pression atmosphérique dans des mélanges gazeux de composition contrôlée et excluant toute trace d'oxygène de l'air. Un tel procédé permet d'opérer une enduction à sec de façon autonome ou en ligne en remplaçant par exemple des stations Corona et/ou des stations d'enduction primaire. Il est largement décrit dans la littérature, notamment par WO 01/58992 et par FR-A-2 873 705.

L'atmosphère ne contient pas le silicone, déjà présent sur le substrat. Ainsi, le silicone n'est pas déposé sur le substrat par le plasma.

L'atmosphère dans laquelle est mis en oeuvre le plasma froid est neutre, de préférence à base d'azote.

On peut travailler sans dopant.

Le dopant qui peut être réducteur ou oxydant représente avantageusement de 0,0001 % à 5 %, de préférence de 0,0001 % à 1 %, notamment de 0,0001 % à 0,1 %, tout particulièrement de 0,0001 % à 0,05 % en poids de l'atmosphère utilisée.

Le dopant utilisé est de préférence C₂H₂ ou N₂O.

On préfère une atmosphère à base d'azote dopée par C₂H₂ ou N₂O, particulièrement C₂H₂.

Dans des conditions préférentielles de mise en oeuvre de l'invention, le traitement par plasma froid est mis en oeuvre dans les conditions suivantes :
- la décharge électrique d'excitation est une décharge micro-onde de préférence de 1 à 5 GHz et de préférence environ 2.45 GHz,
- la dose d'énergie reçue par la composition silicone anti-adhérente est de 1 à 100 W/minute/cm², de préférence de 10 à 80 W/minute/cm², notamment de 20 à 60 W/minute/cm², tout particulièrement de 25 à 50 W/minute/cm²,
- la température réactionnelle peut aller entre la température ambiante, soit environ 20°C, et 80 °C de préférence de 20°C à 40°C.

Dans d'autres conditions préférentielles de mise en oeuvre de l'invention, le substrat est traité non pas statiquement, mais en continu ou semi continu, en défilant dans le réacteur à plasma. Le défilement peut être alors réalisé à une vitesse linéaire comprise entre 1 et 1000 m/min, notamment entre 10 et 500 m/min et de préférence entre 20 et 250 m/min.

Les substrats au moins partiellement revêtus d'une composition silicone "anti-adhérente" à base d'huile(s) silicone(s) traitée(s), de préférence au moins en partie [e.g. totalement réticulée(s)], puis traitée(s) selon le procédé ci-dessus sont des produits nouveaux.

C'est pourquoi la présente demande a aussi pour objet un substrat au moins partiellement revêtu d'un revêtement comprenant une composition silicone anti-adhérente à base d'huile(s) silicone, de préférence au moins en partie (idéalement totalement), réticulée(s) puis traitée selon le procédé ci-dessus décrit.

Compte tenu du traitement subi, les compositions silicone anti-adhérentes au moins en partie (idéalement totalement), réticulée(s) ont une structure modifiée. Ainsi, par exemple dans le cas où la réticulation s'opère par polyaddition et pour des huiles M^{Vi}(D)ₓM^{Vi} et/ou M(D)ₓ(D)_{y}^{Vi}M et/ou M^{Vi}(D)ₓ(D)_{y}^{Vi}M^{Vi} + M'DM' ou MD'M ou MDD'M ou M'DD'M, en présence d'un catalyseur au platine, le traitement par plasma froid selon l'invention donne un réseau réticulé et des motifs MeSi(-CH₂-CH₂-)_{1/2}(O_{2/2}) (en partant de D^{Vi} + D' ou M' ou de D' + D^{Vi} ou M^{Vi}), MeSi(-CH(CH₃)-)_{1/2}(O_{2/2}) (en partant de D^{Vi} + D' ou M' ou de D' + D^{Vi} ou M^{Vi}); Me₂Si(-CH₂-CH₂-)_{1/2}(O_{1/2}) (en partant de M' + D^{Vi} ou M^{Vi} ou de M^{Vi} + D' ou M'), Me₂Si(-CH(CH₃)-)_{1/2}O_{1/2} (en partant de M' + D^{Vi} ou M^{Vi} ou de M^{Vi} + D' ou M').

La présente demande a ainsi plus particulièrement pour objet un substrat au moins partiellement revêtu d'un revêtement anti-adhérent comprenant
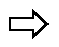 une composition silicone anti-adhérente au moins en partie (idéalement entièrement) réticulée et à base de motifs de Me₂SiO_{2/2}, MeSi(-CH₂-CH₂-)_{1/2}(O_{2/2}), MeSi(-CH(CH₃)-)_{1/2}(O_{2/2})Me₃SiO_{1/2}, Me₂Si(-CH₂-CH₂-)_{1/2}(O_{1/2}), Me₂Si(-CH(CH₃)-)_{1/2}O_{1/2}, et SiO_{4/2},
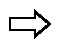 une composition silicone "anti-adhérente" au moins en partie (idéalement entièrement) réticulée et à base de motifs de Me₂SiO_{2/2}, -(CH₂-CH-)ₙ-COO-R-SiMe(O_{2/2}), Me₃SiO_{1/2}, -(CH₂-CH-)ₙ-COO-R-SiMe₂(O_{1/2}) et SiO_{4/2},
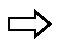 ou une composition silicone "anti-adhérente" au moins en partie (idéalement entièrement) réticulée et à base de motifs de Me₂SiO_{2/2}, Me₃SiO_{1/2}, SiO_{4/2},

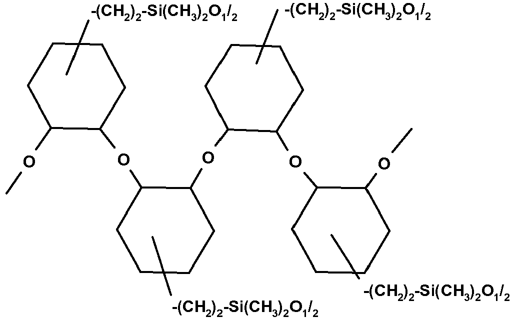

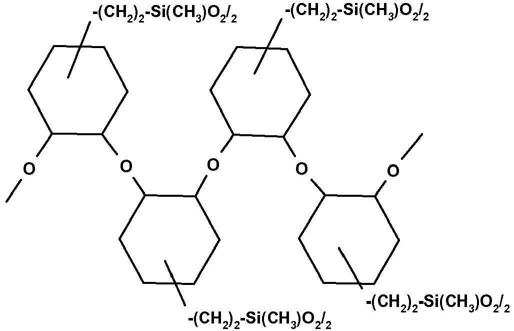

Lorsque l'on veut réaliser un substrat au moins partiellement revêtu d'un revêtement silicone anti-adhérent avec une force de décollement faible (dite "premium release") vis-à-vis d'un adhésif, par exemple inférieure à 10 cN/cm, on utilise avantageusement une (ou des) huiles(s) silicone ayant une quantité importante de motifs D, par exemple supérieure à 80 % molaire et une quantité faible de motifs fonctionnels, par exemple moins de 5 % molaire.

Lorsque l'on veut réaliser un substrat avec une force de décollement moyenne, par exemple entre 10 cN/cm et 30 cN/cm (dite "médium release") on utilise avantageusement une (ou des) huiles(s) ayant une quantité importante de motifs D, par exemple supérieure à 80 % molaire et une quantité faible de motifs fonctionnels, par exemple moins de 5 % molaire.

Lorsque l'on veut réaliser un substrat avec une force de décollement élevée (dite "tight release"), par exemple supérieure à 30 cN/cm, on utilise avantageusement une une (ou des) huiles(s) ayant une quantité importante de motifs SiO₂, par exemple supérieure à 5 % molaire et une quantité faible de motifs D, par exemple moins de 80 % molaire.

Par motif "fonctionnel", on désigne par exemple au sens de la présente invention, un motif siloxy M, D ou T dont l'un au moins des substituants R du silicium est un groupe organofonctionnel, e.g. du type de ceux définis ci-dessus.

Un protocole reconnu de mesure de la force de décollement est par exemple celui décrit par la FINAT selon FINAT 3 ou FINAT 10. On mesure la force de décollement de l'adhésif à faible vitesse de pelage à un angle de 180° à une vitesse de 300 mm/min à l'aide d'un dynamomètre étalonné.

On prépare les éprouvettes de décollement en les maintenant 20 h à 23°C (FINAT 3) et 20 h à 70°C (FINAT 10) en pression de 70 g/cm². Elles sont retirées de leur mise en pression puis stockées au moins 4 h à 23°C à 50 % d'humidité relative avant la mesure.

Les éprouvettes ont une largeur de 2,54 cm et une longueur d'au moins 175 mm. Les résultats sont exprimés en cN/cm.

Les compositions silicone anti-adhérentes, objets de la présente invention, possèdent de très intéressantes propriétés et avantages. Elles présentent notamment des forces de décollement avec les adhésifs variées sur des plages de valeurs intéressantes.

Les forces de décollement avec les adhésifs peuvent être modulées linéairement de 10 cN/cm à 300 cN/cm, en fonction de la dose d'énergie reçue à la surface du silicone.

Un premier avantage de l'invention est d'éviter ou minimiser l'emploi de résines MQ ou MM^{vi}Q ou MD^{vi}Q ou MM'Q ou MD'Q, difficiles à fabriquer, que l'on doit introduire classiquement pour espérer obtenir un pouvoir modulant des forces de décollement dans une composition anti-adhérente.

Par rapport aux traitements plasma sous vide, les procédés ci-dessus sont simples à mettre en oeuvre et peuvent être utilisés en mode dynamique, sous une vitesse de défilement du substrat comprise entre 1 et 1000 m/min et de préférence entre 10 et 250 m/min. Ce procédé constitue un autre avantage de l'invention.

Le traitement est quasi permanent, ce qui constitue un autre avantage, car le film siliconé traité peut être stocké plusieurs mois à température ambiante et faible degré d'hygrométrie (< 50 % Humidité relative) sans modifier le pouvoir anti-adhérent. Ce procédé constitue un autre avantage de l'invention.

Le traitement permet d'élaborer des produits d'une bonne homogénéité.

Ces propriétés et qualités sont illustrées ci-après dans la partie expérimentale. Elles justifient l'utilisation des compositions silicone anti-adhérentes ci-dessus décrites pour l'augmentation des forces de décollement pour obtenir des forces de décollement dites « Tight-Release » ou « Medium-Release ».

C'est pourquoi la présente demande a aussi pour objet un procédé d'augmentation des forces de décollement d'un substrat revêtu d'une composition silicone anti-adhérente ci-dessus vis-à-vis d'un adhésif pour obtenir une force de décollement dite « Tight-Release » ou « Medium-Release ».

On peut aussi bien transformer des forces de décollement « Low-release » en « Medium-Release »ou « Tight-Release », ou transformer des forces de décollement « Medium-Release » en « Tight-Release ».

En conséquence, la présente demande a aussi pour objet un complexe silicone-autoadhésif caractérisé en ce qu'il comprend un premier substrat revêtu d'une composition silicone anti-adhérente ci-dessus décrite et un second substrat revêtu d'un adhésif.

L'adhésif est par exemple un adhésif acrylique, notamment acrylique solvant ou acrylique base aqueuse ou acrylique photoréticulable, de préférence acrylique base aqueuse ou acrylique solvant, de préférence le TESA® 7475, et particulièrement l'adhésif acrylique base aqueuse commercialisé par BASF sous la marque BASF Acronal®, tackifié ou non de préférence l'Acronal® v210.

Ce peut être aussi un adhésif caoutchouc, notamment les adhésifs commerciaux TESA® 7476 ou TESA® 4154 ou TESA® 4651 cités à titre d'exemple.

Ce peut être également un adhésif fusible à chaud (« hot-melt ») ou UV hot-melt, notamment un de ceux décrits dans le brevet US 6,720,399 ou un des adhésifs photopolymérisables de BASF connus sous la marque AC-Resin®, à titre d'exemple le AC-Resin® 258 UV.

Les adhésifs acryliques, ou les adhésifs caoutchoucs sont préférés.

De tels complexes peuvent notamment être mis en oeuvre dans de nombreuses applications comme les étiquettes, les rouleaux adhésifs notamment pour emballages, les serviettes hygiéniques, les bandes adhésives de couches, notamment les couches-culottes, les revêtements bitumineux.

C'est pourquoi la présente demande a aussi pour objet des étiquettes, des rouleaux adhésifs notamment pour emballages, des serviettes hygiéniques, des couches, notamment des couches-culottes, et des revêtements bitumineux comprenant un complexe silicone-autoadhésif ci-dessus décrit.

La présente demande a encore pour objet des étiquettes dites « clear on clear » c'est-à-dire comprenant des supports adhésifs et silicone transparents.

La présente demande a tout particulièrement pour objet une enveloppe munie d'un complexe ci-dessus décrit. A cette fin, le rabat ou le corps de l'enveloppe peut porter l'un l'adhésif, l'autre la composition silicone anti-adhérente.

Les conditions préférentielles de mise en oeuvre des procédés ci-dessus décrites s'appliquent également aux autres objets de l'invention visés ci-dessus, notamment aux compositions silicones anti-adhérentes et aux complexes.

Les exemples qui suivent illustrent la présente demande.

### PARTIE EXPERIMENTALE

### Préparation 1 : Préparation d'un revêtement silicone réticulé par polyaddition :

On prépare une composition silicone à base de :
a) une huile polydiméthylsiloxane α,ω-(diméthylvinylsiloxy) : (Me₂ViSiO_{1/2}) contenant des motifs du type poly(diméthylsiloxy) : (Me₂SiO_{2/2}) et poly(méthylvinylsiloxy) : (MeViSiO_{2/2}), à 2,5 % en poids de Vi et ayant une viscosité de 450 cps,
b) une huile polydiméthylsiloxane à extrémités α,ω-(diméthylvinylsiloxy) : (Me₂ViSiO_{1/2}) contenant des motifs du type poly(diméthylsiloxy) : (Me₂SiO_{2/2}), à 0,37 % en poids de Vi et ayant une viscosité de 600 cps,
c) une huile polydiméthylsiloxane hydrogénée α,ω-(triméthylsiloxy) : (Me₃SiO_{1/2}) contenant des motifs du type poly(méthylhydrogénosiloxy) : (MeHSiO_{2/2}), à 1,5 % en poids de H et ayant une viscosité de 30 cps,
comme suit :
On mélange par agitation 1000 g du mélange a)/b) 80/20 avec 70 g du polymère c) puis on ajoute 50 g de catalyseur à base de platine de Karstedt à 2800 ppm de Pt dilué dans une huile polydiméthylsiloxane d) à extrémités α,ω-(diméthylvinylsiloxy) : (Me₂ViSiO_{1/2}) contenant des motifs du type poly(diméthylsiloxy) : (Me₂SiO_{2/2}), à 0,5 % en poids de Vi et ayant une viscosité de 350 cps.

On mélange de nouveau la préparation avant de la déverser dans la fente de couchage pour enduction sur film.

On dépose à l'aide d'un pilote d'enduction muni d'une tête cinq cylindres 0,8 g/m² de la composition silicone ainsi obtenue sur un support polyester de la société Toray (réf Lumirror® 60.01).

On fait réticuler à la chaleur la composition silicone dans des fours à une vitesse de défilement de 100 m/min.

La température du support est de 140°C en sortie de four.

### Exemple 1 :

On réalise un traitement plasma du film polyester siliconé réticulé de la préparation 1 à 75 m/min selon le procédé ALDYNE® pour une dose électrique à la surface du silicone de 20 W/minute/cm². On opère à la température et pression ambiantes.

Le procédé ALDYNE® consiste à utiliser des décharges électriques filamentaires, uniformément distribuées à pression atmosphérique dans des mélanges gazeux de composition contrôlée et excluant toute trace d'oxygène de l'air, opérant une enduction à sec de façon autonome ou en ligne en remplaçant par exemple des stations Corona et/ou d'enduction primaire.

L'atmosphère est réductrice car le gaz de traitement utilisé est de l'azote pur dopé avec 500 ppm d'hydrogène.

On enduit en ligne avec un adhésif caoutchouc naturel TESA®4651 et un adhésif acrylique TESA®7475.

### Exemple 2 :

On réalise un traitement plasma selon le procédé ALDYNE® du film polyester siliconé de la préparation 1 à 75 m/min pour une dose électrique à la surface de la silicone de 20 W/minute/cm².

L'atmosphère est oxydante car le gaz de traitement utilisé est de l'azote pur dopé avec 500 ppm de protoxyde d'azote.

On enduit en ligne avec un adhésif caoutchouc naturel TESA®4651 et un adhésif acrylique TESA®7475.

### Exemple 3 :

On réalise un traitement plasma selon le procédé ALDYNE® du film polyester siliconé de la préparation 1 à 75 m/min pour une dose électrique à la surface de la silicone de 20 W/minute/cm².

L'atmosphère est organique car le gaz de traitement utilisé est de l'azote pur dopé avec 500 ppm d'acétylène.

On enduit en ligne avec un adhésif caoutchouc naturel TESA®4651 et un adhésif acrylique TESA®7475.

### Exemple 4 :

On réalise un traitement plasma selon le procédé ALDYNE® du film polyester siliconé de la préparation 1 à 75 m/min pour une dose électrique à la surface de la silicone de 20 W/minute/cm².

L'atmosphère est neutre car le gaz de traitement utilisé est de l'azote pur non dopé.

On enduit en ligne avec un adhésif caoutchouc naturel TESA®4651 et un adhésif acrylique TESA®7475.

### Exemple 5 :

On réalise un traitement plasma selon le procédé ALDYNE® du film polyester siliconé de la préparation 1 à 75 m/min pour une dose électrique à la surface de la silicone de 60 W/minute/cm².

L'atmosphère est neutre car le gaz de traitement utilisé est de l'azote pur dopé avec 500 ppm d'hydrogène.

On enduit en ligne avec un adhésif caoutchouc naturel TESA®4651 et un adhésif acrylique TESA®7475.

### Exemple 6 :

On réalise un traitement plasma selon le procédé ALDYNE® du film polyester siliconé de la préparation 1 à 75 m/min pour une dose électrique à la surface de la silicone de 60 W/minute/cm².

L'atmosphère est neutre car le gaz de traitement utilisé est de l'azote pur non dopé.

On enduit après 24 h avec un adhésif caoutchouc naturel TESA®4651 et un adhésif acrylique TESA®7475.

### Etude des propriétés :

Après avoir été sorti de la machine d'enduction, le film est soumis à un test de vieillissement qui consiste à stocker les complexes adhésivés sous pression 70 g/cm2 pendant 20 h à 20°C et 20 h à 70°C en vieillissement accéléré.

On a alors mesuré la force de décollement pour chacun des produits selon la méthode de test de la FINAT numérotée FINAT 3 (20 h à 23°C) et FINAT 10 (20 h à 70°C).

Les résultats obtenus sont les suivants :

| **20 h à 23°C** | **Conditions** | **Dose (W/min/cm²)** | **TESA®4651** | **TESA®7475** |
|---|---|---|---|---|
| | | | cN/cm | cN/cm |
| Témoin | Sans plasma | 0 | 7 | 7 |
| Exemple 1 | Plasma N₂ /dopé H₂ | 20 | 23,5 | 256 |
| Exemple 2 | Plasma N₂/ dopé N₂O | 20 | 19 | 238 |
| Exemple 3 | Plasma N₂/ dopé HC≡CH | 20 | 61,7 | 321 |
| Exemple 4 | Plasma N₂ non dopé | 20 | 40 | 280 |
| Exemple 5 | Plasma N₂ /dopé H₂ | 60 | 53 | 1000 |
| Exemple 6 | Plasma N₂ non dopé | 60 | 43 | 1000 |

| **20 h à 70°C** | **Conditions** | **Dose (W/min/cm²)** | **TESA®4651** | **TESA®7475** |
|---|---|---|---|---|
| | | | cN/cm | cN/cm |
| Témoin | Sans plasma | 0 | 12 | 14 |
| Exemple 1 | Plasma N₂ /dopéH₂ | 20 | 70 | 250 |
| Exemple 2 | Plasma N₂ /dopé N₂O | 20 | 37 | 233 |
| Exemple 3 | Plasma N₂ /dopé HC≡CH | 20 | 150 | 321 |
| Exemple 4 | Plasma N₂ non dopé | 20 | 70 | 280 |
| Exemple 5 | Plasma N₂ /dopé H₂ | 60 | 65 | 1000 |
| Exemple 6 | Plasma N₂ non dopé | 60 | 43 | 1000 |

On note que la dose de 60 W/minute/cm² est trop forte pour l'adhésif acrylique TESA® 7475 (exemples 5 et 6). Les traitements plasma N₂, dopés ou non, tels que la dose soit inférieure à 60 W/minute/cm², sont très efficaces pour moduler les forces de décollement.

## Revendications

1. Procédé de préparation d'un substrat comprenant un revêtement anti-adhérent obtenu à partir d'une composition silicone "anti-adhérente" à base d'huile(s) silicone(s) de préférence au moins en partie réticulée(s) et à propriétés d'adhésion modifiées par rapport à ses propriétés d'origine, dans lequel
on prévoit un substrat au moins partiellement revêtu du susdit revêtement,
et on traite le revêtement silicone anti-adhérent par plasma froid,
environ à la pression atmosphérique,
dans une atmosphère d'azote éventuellement dopé par moins de 1 % en poids d'un ou plusieurs des éléments dans le groupe constitué par H₂ ; N₂O ; Acétylène ; SiH₄ ; CF₄, CO₂, O₂, H₂O,
ou dans une atmosphère de dioxyde de carbone, éventuellement dopé par moins de 1 % en poids d'un ou plusieurs des éléments choisis dans le groupe constitué par H₂ ; N₂O ; Acétylène ; SiH₄ ; CF₄, N₂, O₂, H₂O.

2. Procédé selon la revendication 1, **caractérisé en ce que** la composition silicone "anti-adhérente" comporte une ou plusieurs huiles polyorganosiloxane comprenant des motifs M et D et réticulable par poly-addition et/ou par voie cationique et/ou radicalaire, de préférence sous activation actinique et/ou thermique et/ou par faisceau d'électrons, M représentant R₃SiO_{1/2}- et D représentant R₂SiO_{2/2}--, les radicaux R représentant indépendamment les uns des autres H; -OH ou un radical organique choisi parmi des radicaux hydrocarbures linéaires ou ramifiés contenant 0 ou 1 degré d'insaturation, substitués ou non, de préférence un groupe alkyle, un groupe alkényle, un groupe aryle, un groupe organofonctionnel, avantageusement un groupe aminoalkyle, époxyalkyle, (meth)acryloxyalkyle, isocyanoalkyle, trifluoroalkyle ou perfluoroalkyle.

3. Procédé selon la revendication 2, **caractérisé en ce que** les motifs M sont choisis parmi les motifs Me₃SiO_{1/2}, Me₂ViSiO_{1/2}, Me₂EpoxySiO_{1/2}, Me₂AcrylateSiO_{1/2}, ViMe₂SiO et Me₂HSiO_{1/2}.

4. Procédé selon la revendication 2 ou 3, **caractérisé en ce que** les motifs D sont choisis parmi les motifs Me₂SiO_{2/2}, MeViSiO_{2/2}, MeHSiO_{2/2}, MeEpoxySiO_{2/2} et MeAcrylateSiO_{2/2}.

5. Procédé selon l'une des revendications 1 à 4, **caractérisé en ce que** le substrat est à base de matières plastiques et/ou de papier ou analogues.

6. Procédé selon l'une des revendications 1 à 5, **caractérisé en ce qu'**il est mis en oeuvre à une pression de 0,75 à 1,5 bars.

7. Procédé selon l'une des revendications 1 à 6, **caractérisé en ce que** l'atmosphère contient de 0,0001 % à 5 % en poids de dopant.

8. Procédé selon l'une des revendications 1 à 7, **caractérisé en ce que** l'atmosphère est une atmosphère à base d'azote dopée par H2, C₂H₂ ou N₂O.

9. Procédé selon l'une des revendications 1 à 8, **caractérisé en ce que** la dose d'énergie reçue par la composition silicone "anti-adhérente" est de 10 à 80 W/minute/cm².

10. Procédé selon l'une des revendications 1 à 9, **caractérisé en ce que** le substrat est traité en continu à une vitesse linéaire de défilement comprise entre 1 et 1000 m/min.

11. Procédé selon l'une quelconque des revendications précédentes, **caractérisé en ce que** pour obtenir un revêtement silicone anti-adhérent ayant une force de décollement :
a) inférieure à 10 cN/cm, on utilise une (ou des) huile(s) silicone ayant une quantité de motifs D supérieure à 80 % molaire et une quantité de motif(s) fonctionnel(s) inférieure à 5 % molaire,
b) comprise entre 10 cN/cm et 30 cN/cm, on utilise une (ou des) huile(s) silicone ayant une quantité de motifs D supérieure à 80 % molaire et une quantité de motif(s) fonctionnel(s) supérieure à 5 % molaire ;
c) supérieure à 30 cN/cm, on utilise une (ou des) huile(s) silicone ayant une quantité de motifs SᵢO₂ supérieure à 5 % molaire, et une quantité de motifs D inférieure à 80 % molaire.

12. Substrat au moins partiellement revêtu d'un revêtement anti-adhérent comprenant une composition silicone anti-adhérente à base d'huile(s) silicone au moins en partie réticulée(s) puis traitée(s) selon le procédé tel que défini à l'une des revendications 1 à 11.

13. Substrat selon la revendication 12, au moins partiellement revêtu d'un revêtement anti-adhérent comprenant :
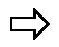 une composition silicone anti-adhérente au moins en partie réticulée et à base de motifs de Me₂SiO_{2/2}, MeSi(-CH₂-CH₂-)_{1/2}(O_{2/2}), MeSi(-CH(CH₃))_{1/2}(O_{2/2}) Me₃SiO_{1/2}, Me₂Si(-CH₂-CH₂-)_{1/2}(O_{1/2}), Me₂Si(-CH(CH₃)-)_{1/2}O_{1/2}, et SiO_{4/2},
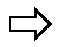 une composition silicone anti-adhérente au moins en partie réticulée et à base de motifs de Me₂SiO_{2/2}, -(CH₂-CH-)ₙ-COO-R-SiMe(O_{2/2}), Me₃SiO_{1/2}, -(CH₂-CH-)ₙ-COO-R-SiMe₂(O_{1/2}) et SiO_{4/2},
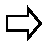 ou une composition silicone anti-adhérente au moins en partie réticulée et à base de motifs de Me₂SiO_{2/2}, Me₃SiO_{1/2}, SiO_{4/2},

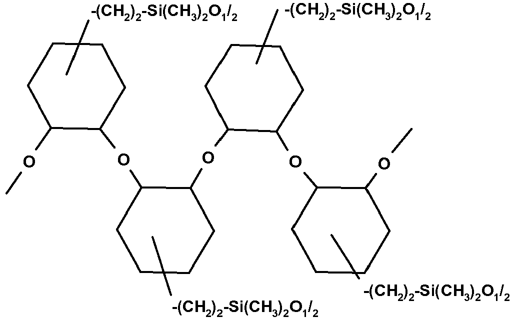

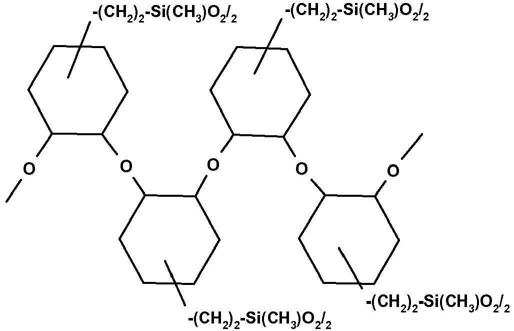

14. Complexe silicone-autoadhésif **caractérisé en ce qu'**il comprend un premier substrat tel que défini à l'une des revendications 12 et 13 et un second substrat revêtu d'un adhésif.

15. Complexe silicone-autoadhésif selon la revendication 14, **caractérisé en ce que** l'adhésif est un adhésif acrylique ou un adhésif caoutchouc.

16. Etiquette, rouleau adhésif, serviette hygiénique, couche telle qu'une couche-culotte, ou revêtement bitumineux comprenant un complexe silicone-autoadhésif tel que défini à l'une des revendications 14 et 15.

17. Enveloppe comprenant un complexe silicone-autoadhésif tel que défini à l'une des revendications 14 et 15.

## Patentansprüche

1. Verfahren zur Herstellung eines Substrats mit einer Antihaftbeschichtung, die ausgehend von einer "Antihaft"-Silikonzusammensetzung auf Basis von Silikonöl(en) erhalten wird, das/die vorzugsweise zumindest teilweise vernetzt ist bzw. sind und in Bezug auf ihre ursprünglichen Eigenschaften modifizierte Hafteigenschaften hat bzw. haben, bei dem
ein Substrat vorgesehen wird, das zumindest teilweise mit der oben genannten Beschichtung beschichtet ist,
und die Antihaftsilikonbeschichtung mit Kaltplasma behandelt wird,
ungefähr bei atmosphärischem Druck,
in einer Atmosphäre aus Stickstoff, der gegebenenfalls mit mindestens 1 Gew.-% eines oder mehrerer Elemente aus der aus H₂, N₂O, Acetylen, SiH₄, CF₄, CO₂, O₂, H₂O bestehenden Gruppe dotiert ist,
oder in einer Atmosphäre aus Kohlendioxid, das gegebenenfalls mit mindestens 1 Gew.-% eines oder mehrerer Elemente dotiert ist, die aus der aus H₂, N₂O, Acetylen, SiH₄, CF₄, N₂, O₂, H₂O bestehenden Gruppe ausgewählt sind.

2. Verfahren nach Anspruch 1, **dadurch gekennzeichnet, dass** die "Antihaft"-Silikonzusammensetzung ein oder mehrere Polyorganosiloxanöle mit M- und D-Einheiten umfasst und durch Polyaddition und/oder kationisch und/oder radikalisch, vorzugsweise unter aktinischer Aktivierung und/oder thermischer Aktivierung und/oder Elektronenstrahlaktivierung vernetzbar ist, wobei M R₃SiO_{1/2}- und D R₂SiO_{2/2}- darstellen, wobei die Reste R unabhängig voneinander H, -OH oder einen organischen Rest darstellen, der aus den linearen oder verzweigten Kohlenwasserstoffresten mit 0 oder 1 Grad an Ungesättigtheit, die substituiert sind oder nicht, ausgewählt ist, vorzugsweise eine Alkylgruppe, eine Alkenylgruppe, eine Arylgruppe, eine organofunktionelle Gruppe, vorteilhafterweise eine Aminoalkyl-, Epoxyalkyl-, (Meth)acryloxyalkyl-, Isocyanoalkyl-, Trifluoralkyl- oder Perfluoralkylgruppe.

3. Verfahren nach Anspruch 2, **dadurch gekennzeichnet, dass** die M-Einheiten aus den Einheiten Me₃SiO_{1/2}, Me₂ViSiO_{1/2}, Me₂EpoxySiO_{1/2}, Me₂AcrylatSiO_{1/2}, ViMe₂SiO und Me₂HSiO_{1/2} ausgewählt sind.

4. Verfahren nach Anspruch 2 oder 3, **dadurch gekennzeichnet, dass** die D-Einheiten aus den Einheiten Me₂SiO_{2/2}, MeViSiO_{2/2}, MeHSiO_{2/2}, MeEpoxySiO_{2/2} und MeAcrylatSiO_{2/2} ausgewählt sind.

5. Verfahren nach einem der Ansprüche 1 bis 4, **dadurch gekennzeichnet, dass** das Substrat auf Basis von Kunststoffen und/oder Papier oder dergleichen ist.

6. Verfahren nach einem der Ansprüche 1 bis 5, **dadurch gekennzeichnet, dass** es bei einem Druck von 0,75 bis 1,5 bar ausgeführt wird.

7. Verfahren nach einem der Ansprüche 1 bis 6, **dadurch gekennzeichnet, dass** die Atmosphäre 0,0001 bis 5 Gew.-% Dotiermittel enthält.

8. Verfahren nach einem der Ansprüche 1 bis 7, **dadurch gekennzeichnet, dass** die Atmosphäre eine Atmosphäre auf Basis von mit H₂, C₂H₂ oder N₂O dotiertem Stickstoff ist.

9. Verfahren nach einem der Ansprüche 1 bis 8, **dadurch gekennzeichnet, dass** die von der "Antihaft"-Silikonzusammensetzung erhaltene Energiedosis 10 bis 80 W/Minute/cm² beträgt.

10. Verfahren nach einem der Ansprüche 1 bis 9, **dadurch gekennzeichnet, dass** das Substrat kontinuierlich bei einer linearen Durchlaufgeschwindigkeit zwischen 1 und 1000 m/min behandelt wird.

11. Verfahren nach einem der vorhergehenden Ansprüche, **dadurch gekennzeichnet, dass** zum Erhalten einer Antihaft-Silikonbeschichtung mit einer Ablösekraft:
a) von weniger als 10 cN/cm ein Silikonöl oder Silikonöle mit einem Anteil an D-Einheiten von mehr als 80 Mol-% und einem Anteil an einer funktionellen Einheit bzw. an funktionellen Einheiten von weniger als 5 Mol-% verwendet wird bzw. werden,
b) zwischen 10 cN/cm und 30 cN/cm ein Silikonöl oder Silikonöle mit einem Anteil an D-Einheiten von mehr als 80 Mol-% und einem Anteil an einer funktionellen Einheit bzw. an funktionellen Einheiten von mehr als 5 Mol-% verwendet wird bzw. werden,
c) von mehr als 30 cN/cm ein Silikonöl oder Silikonöle mit einem Anteil an SiO₂-Einheiten von mehr als 5 Mol-% und einem Anteil an D-Einheiten von weniger als 80 Mol-% verwendet wird bzw. werden.

12. Substrat, das zumindest teilweise mit einer Antihaft-Beschichtung beschichtet ist, die eine Antihaft-Silikonzusammensetzung auf der Basis von Silikonöl(en) umfasst, das bzw. die gemäß dem Verfahren nach einem der Ansprüche 1 bis 11 zumindest teilweise vernetzt und anschließend behandelt wird bzw. werden.

13. Substrat nach Anspruch 12, das zumindest teilweise mit einer Antihaft-Beschichtung beschichtet ist, die Folgendes umfasst:
⇒ eine zumindest teilweise vernetzte Antihaft-Silikonzusammensetzung auf der Basis von Einheiten aus Me₂SiO_{2/2}, MeSi(-CH₂-CH₂-)_{1/2}(O_{2/2}), MeSi(-CH(CH₃))_{1/2}(O_{2/2}), Me₃SiO_{1/2}, Me₂Si(-CH₂-CH₂-)_{1/2}(O_{1/2}), Me₂Si(-CH(CH₃)-)_{1/2}O_{1/2} und SiO_{4/2},
⇒ eine zumindest teilweise vernetzte Antihaft-Silikonzusammensetzung auf der Basis von Einheiten aus Me₂SiO_{2/2}, -(CH₂-CH-)ₙ-CCO-R-SiMe(O_{2/2}), Me₃SiO_{1/2}, -(CH₂-CH-)ₙ-COO-R-SiMe₂(O_{1/2}) und SiO_{4/2},
⇒ oder eine zumindest teilweise vernetzte Antihaft-Silikonzusammensetzung auf der Basis von Einheiten aus Me₂SiO_{2/2}, Me₃SiO_{1/2}, SiO_{4/2},

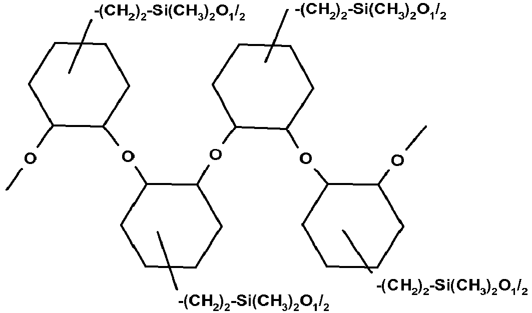

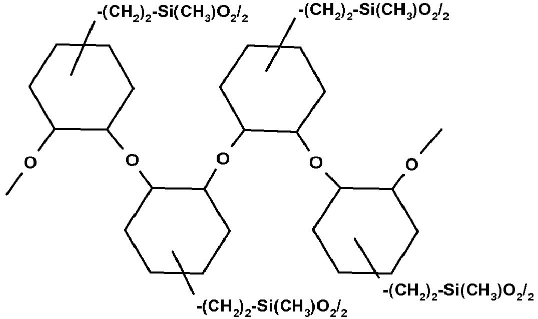

14. Silikon-Selbstklebemittel-Komplex, **dadurch gekennzeichnet, dass** er ein erstes Substrat nach einem der Ansprüche 12 und 13 und ein zweites Substrat, das mit einem Klebemittel beschichtet ist, umfasst.

15. Silikon-Selbstklebemittel-Komplex nach Anspruch 14, **dadurch gekennzeichnet, dass** es sich bei dem Klebemittel um ein Acrylklebemittel oder um ein Kautschukklebemittel handelt.

16. Etikett, Kleberolle, Damenbinde, Windel, wie etwa Windelhöschen, oder bituminöse Beschichtung mit einem Silikon-Selbstklebemittel-Komplex nach einem der Ansprüche 14 und 15.

17. Hülle, die einen Silikon-Selbstklebemittel-Komplex nach einem der Ansprüche 14 und 15 umfasst.

## Claims

1. Method for the preparation of a substrate comprising an anti-adhesive coating obtained from an "anti-adhesive" silicone composition based on preferably at least partly cross-linked silicone oil(s), having modified adhesion properties with respect to its original properties, in which,
a substrate is provided, at least partially coated with the abovementioned coating, and the anti-adhesive silicone coating is treated with cold plasma,
approximately at atmospheric pressure,
in a nitrogen atmosphere optionally doped with less than 1% by weight of one or more of the elements in the group constituted by H₂; N₂O; Acetylene; SiH₄; CF₄, CO₂, O₂, H₂O,
or in a carbon dioxide atmosphere, optionally doped with less than 1% by weight of one or more of the elements chosen from the group constituted by H₂; N₂O; Acetylene; SiH₄; CF₄, N₂, O₂, H₂O.

2. Method according to claim 1, **characterized in that** the "anti-adhesive" silicone composition comprises one or more polyorganosiloxane oils comprising M and D units and which can be cross-linked by poly-addition and/or by cationic and/or radical route, preferably under actinic and/or thermal activation and/or by electron beam activation, M representing R₃SiO_{1/2} and D representing R₂SiO_{2/2}-, the R radicals representing independently of each other H; -OH or an organic radical chosen from linear or branched hydrocarbon radicals containing 0 or 1 degree of unsaturation, substituted or not, preferably an alkyl group, an alkenyl group, an aryl group, an organofunctional group, advantageously an aminoalkyl, epoxyalkyl, (meth)acryloxyalkyl, isocyanoalkyl, trifluoroalkyl or perfluoroalkyl group.

3. Method according to claim 2, **characterized in that** the M units are chosen from the Me₃SiO_{1/2}, Me₂ViSiO_{1/2}, Me₂EpoxySiO_{1/2}, Me₂AcrylateSiO_{1/2}, ViMe₂SiO and Me₂HSiO_{1/2} units.

4. Method according to claim 2 or 3, **characterized in that** the D units are chosen from the Me₂SiO_{2/2}, MeViSiO_{2/2}, MeHSiO_{2/2}, MeEpoxySiO_{2/2} and MeAcrylateSiO_{2/2} units.

5. Method according to one of claims 1 to 4, **characterized in that** the substrate is based on plastic materials and/or paper or similar.

6. Method according to one of claims 1 to 5, **characterized in that** it is implemented at a pressure of 0.75 to 1.5 bars.

7. Method according to one of claims 1 to 6, **characterized in that** the atmosphere contains from 0.0001% to 5% by weight of dopant.

8. Method according to one of claims 1 to 7, **characterized in that** the atmosphere is an atmosphere based on nitrogen doped with H2, C₂H₂ or N₂O.

9. Method according to one of claims 1 to 8, **characterized in that** the dose of energy received by the "anti-adhesive" silicone composition is 10 to 80 W/minute/cm².

10. Method according to one of claims 1 to 9, **characterized in that** the substrate is treated continuously at a linear speed of movement comprised between 1 and 1000 m/min.

11. Method according to any one of the previous claims, **characterized in that** in order to obtain an anti-adhesive silicone coating having a release force:
a) less than 10 cN/cm, one or more silicone oil(s) having a quantity of D units greater than 80 molar % and a quantity of functional unit(s) less than 5 molar % are used,
b) comprised between 10 cN/cm and 30 cN/cm, one or more silicone oil(s) having a quantity of D units greater than 80 molar % and a quantity of functional unit(s) greater than 5 molar % are used;
c) greater than 30 cN/cm, one or more silicone oil(s) having a quantity of SiO₂ units greater than 5 molar %, and a quantity of D units less than 80 molar % are used.

12. Substrate at least partially coated with an anti-adhesive coating comprising an anti-adhesive silicone composition based on silicone oil(s) which are at least partly cross-linked then treated according to the method as defined in one of claims 1 to 11.

13. Substrate according to claim 12, at least partially coated with an anti-adhesive coating comprising:
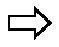 an anti-adhesive silicone composition which is at least partly cross-linked and based on Me₂SiO_{2/2}, MeSi(-CH₂-CH₂-)_{1/2}(O_{2/2}), MeSi(-CH(CH₃))_{1/2}(O_{2/2}) Me₃SiO_{1/2},
Me₂Si(-CH₂-CH₂-)_{1/2}(O_{1/2}), Me₂Si(-CH(CH₃)-)_{1/2}O_{1/2}, and SiO_{4/2} units,
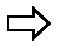 ⇒ an anti-adhesive silicone composition which is at least partly cross-linked and based on Me₂SiO_{2/2}, -(CH₂-CH-)ₙ-COO-R-SiMe(O_{2/2}), Me₃SiO_{1/2}, -(CH₂-CH-)ₙ-COO-R-SiMe₂(O_{1/2}) and SiO_{4/2} units,
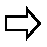 or an anti-adhesive silicone composition which is at least partly cross-linked and based on Me₂SiO_{2/2}, Me₃SiO_{1/2}, SiO_{4/2} units, 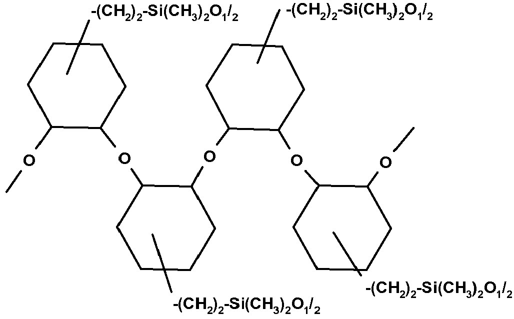 units
and 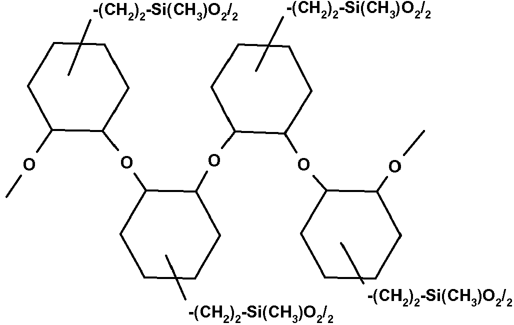 units

14. Silicone-self-adhesive complex **characterized in that** it comprises a first substrate as defined in one of claims 12 and 13 and a second substrate coated with an adhesive.

15. Silicone-self-adhesive complex according to claim 14, **characterized in that** the adhesive is an acrylic adhesive or a rubber adhesive.

16. Label, roll of adhesive tape, sanitary pad, nappy such as a disposable nappy, or bituminous coating comprising a silicone-self-adhesive complex as defined in one of claims 14 and 15.

17. Envelope comprising a silicone-self-adhesive complex as defined in one of claims 14 and 15.
